# EUROPEAN PATENT APPLICATION

(11) **EP 0 973 287 A2**
(43) Date of publication of application: **19.01.2000**
(21) Application number: 99305534.2
(22) Date of filing: 13.07.1999
(51) Int. Cl.: H04H 1/00

(54) **Receiver for receiving text broadcasts which are transmitted in addition to an audio broadcast programme**

(30) Priority: 14.07.1998 JP 19823398
(71) Applicant: SONY CORPORATION, Tokyo 141 (JP)
(72) Inventor: Ochiai, Kensaku, c/o Sony Corporation, Tokyo (JP)
(74) Representative: Ayers, Martyn Lewis Stanley

(57) **Abstract**

A character string table which stores character strings in the form of character code string written in a plurality of languages used when the operation mode is displayed is provided. An ID code for identifying the country or language is extracted from the data extracted by a decoder circuit. A character code string of the language corresponding to the extracted ID code is selected from among character code strings in the character string table. The operation mode is displayed on a display element based on the extracted character code string. Thus, the operation mode and setting menu are displayed in the native language of a user on a text broadcast receiver.

## Description

This invention relates to a receiver for receiving text broadcasts.

In the field of FM-broadcasting, so-called "FM multiplexed text broadcasts" in which digital data such as character information is frequency multiplexed and transmitted together with the original audio broadcast program, has been realized.

The system so-called DARC system has been employed in Japan for FM multiplexed text broadcast, on the other hand, the system so-called DRIS system, which is modified DARC system, has been employed in the United States and Europe. In DRIS system, the specification for multiplexing digital data such as character information described herein under is used.
Subcarrier frequency: 76 kHz
Transfer rate: 16 kbps
Modulation: LMSK
Error correction: Product coding using (272, 190) compact difference cyclic code

The LMSK signal is frequency multiplexed on the audio signal (monophonic or stereo composite signal) of the original audio broadcast program and the frequency multiplexed signal is transmitted.

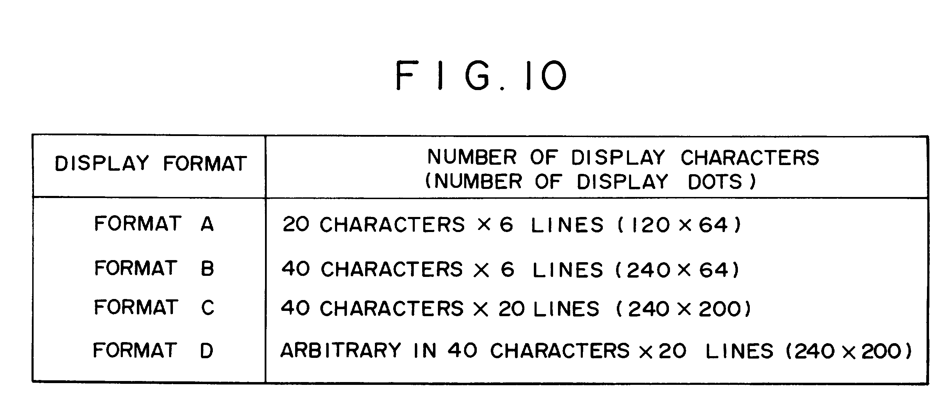

Four types of format A, B, C, and D are available as the text program display format, and the number of characters to be displayed for each format is shown in Fig. 10. The text program includes not only characters such as alphanumerals and symbols but also patterns, and is provided with paging function.

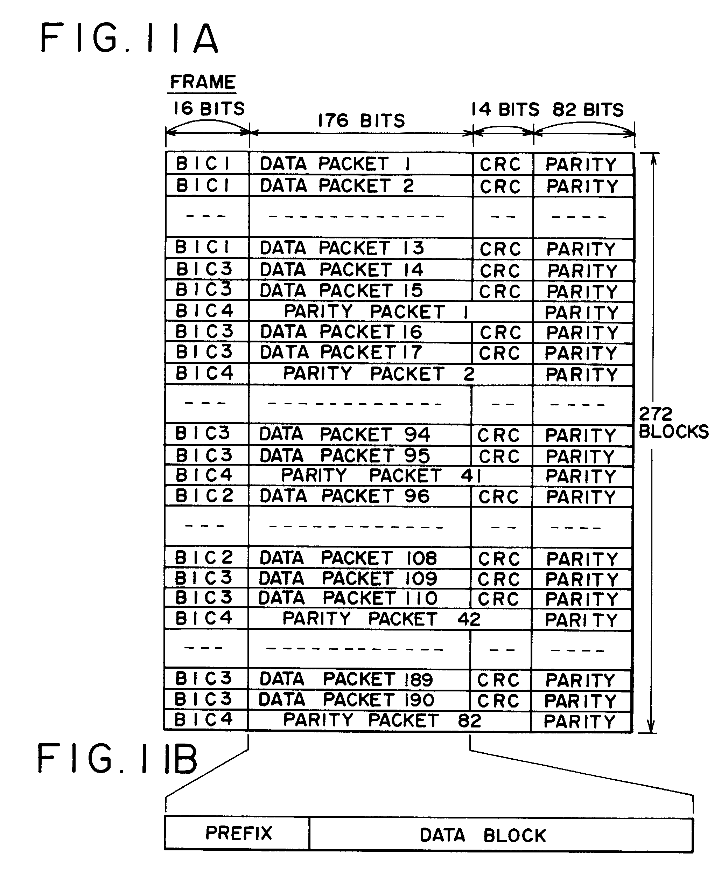

Four types of frame structures B, A0, A1, and C are available for transmission of the data, and a frame structure B is shown in Fig. 11A as an example. The frame structure B is the same as the frame structure of DARC system, one frame consists of 272 blocks and each block consists of 288 bits.

272 blocks included in one frame are classified into 190 data packet blocks and 82 vertical parity packet blocks, and the vertical parity packet blocks are distributed (interleave) in the frame when transmitted.

16 bit BIC (Block Identity Code) is added to the head of each block. Four types of BIC are used to discriminate each parity packet and to identify the head of each frame.

Each data packet block has a 176 bit data packet subsequent to the BIC, a 14 bit CRC code is added after the data packet, and a 82 bit horizontal parity check code is added after the CRC code.

The CRC code is added to detect residual errors after error correction by use of the product code. The vertical parity packet blocks have a 272 bit vertical parity packet subsequent to the BIC.

A data packet comprises a prefix and a subsequent data block as shown in Fig. 11B. A prefix comprises a data packet number and data for indicating the type of data block, and has a character code for controlling the data block to display characters actually and to control character displaying.

The frame structure A0 is the same as the frame structure B, though the packet is not subjected to interleave processing. The frame structure A1 is the same as the frame structure A0, though a real time block comprising 12 blocks is inserted to the generated frame. The frame structure C comprises only the data packet.

The outline of DRIS system format is described herein above. A broadcasting station transmits the data of the same content repeatedly so that viewers can view the text program whenever they receive broadcasted programs and viewers do not miss to view the text program even if the data is not received properly due to reception error.

Because the transfer rate of the data and the size of a frame are specified as described herein above, the time of slightly shorter than 5 second (= 288 bits × 272 blocks/16 kbits) is required to broadcast or transmit the 1 frame data in the case of the frame structure B.

Meanwhile, because DRIS system is used in the United States and Europe, a receiver should be made to be acceptable of 7 languages when a manufacturer makes a receiver for receiving FM text broadcasts of DRIS system. In other words, a receiver should be made so that a user can select a language to be displayed from among 7 languages when the user wants to display the operation mode or menu for setting various functions on a display.

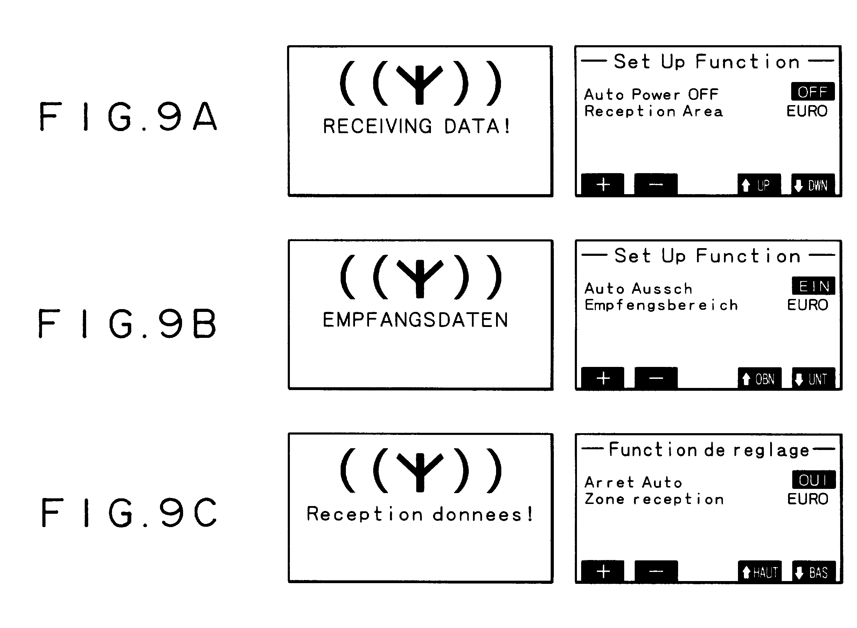

Figs. 9A to 9C show exemplary displays using some languages, Fig. 9A shows an English display, Fig. 9B shows a German display, and Fig. 9C shows a French display. Exemplary displays during reception of text broadcast data are shown on the left side, and exemplary displays of partial menu setting are shown on the right side.

In detail, a receiver is provided with a language switching function, and for example as shown in Fig. 9A, the English is displayed as the default, but a user can switch the display language to a language desired by the user.

However, in some cases, there are people who can not understand English depending on the country and the user, the user can not switch the display language even though the receiver is provided with a display language switching function.

In such case, to avoid such trouble, it has been required that the manufacturer sets the language for respective countries of destination in the factory for shipping or the language is switched in a store by a store clerk when a receiver is given to a customer.

The present invention has been accomplished to solve the above-mentioned problem.

The present invention provides a text broadcast receiver for receiving multiplexed text broadcasts comprising:
a receiving circuit for receiving the multiplexed text broadcasts;
a decoder circuit for extracting the text program data from the multiplexed signal received by the receiving circuit;
a display element for displaying the text program based on the data extracted by the decoder circuit; and
a character string table which stores character strings in a plurality of languages corresponding to the character string used when the operation mode of the receiver or function setting menu is displayed, and
the operation comprising:
a step for extracting ID code for identifying the country or the language from the data extracted by the decoder circuit;
a step for selecting a character code string of the language corresponding to the extracted ID code from among character code strings in the character string table; and
a step for displaying the operation mode or function setting menu on the display element by use of the selected character string.

Accordingly, when the operation mode is displayed on the display element, the language of the character is selected automatically.

The present invention will be more clearly understood from the following description, given by way of example only, with reference to the accompanying drawings in which:

Fig. 1 is a block diagram for illustrating one embodiment of the present invention.

Fig. 2 is a flow chart for describing one embodiment of the present invention.

Fig. 3 is a flow chart for describing one embodiment of the present invention.

Fig. 4 is a flow chart for describing one embodiment of the present invention.

Fig. 5 is a flow chart for describing one embodiment of the present invention.

Fig. 6 is a diagram for describing the present invention.

Fig. 7 is a diagram for describing the present invention.

Fig. 8 is a diagram for describing the present invention.

Figs. 9A, 9B, and 9C are diagrams for describing the present invention.

Fig. 10 is a diagram for describing the present invention.

Figs. 11A and 11B are diagrams for describing the present invention.

Figs. 12A, 12B, 12C, 12D, and 12E are diagrams for describing the present invention.

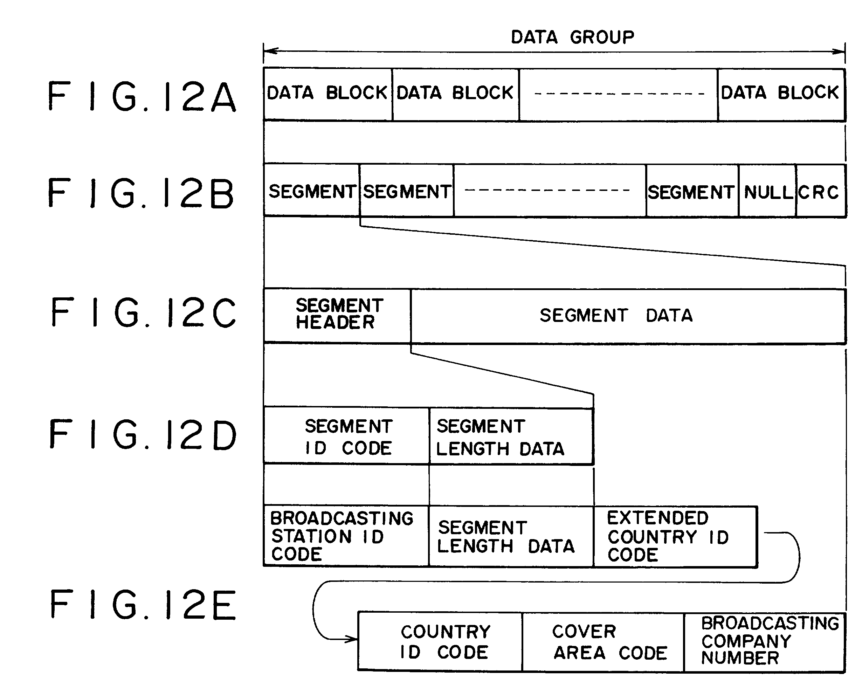

In DRIS system, in the case of a data packet having the prefix value of 13 or smaller, an additional information is added to the subsequent data block. In detail, as shown in Fig. 12A, one data group comprises one or a plurality of data blocks, and as shown in Fig. 12B, one data group is divided into one or a plurality of segments.

A CRC code for detecting errors of the data group is loaded at the tail of the data group. Because the length of a segment is arbitrary, when unnecessary bits are formed between the tail segment and CRC code, the unnecessary bits are specified to be a null code.

As shown in Fig. 12C, a segment is divided into a segment header and segment data, and as shown in Fig. 12D, a segment identity code and segment length data are loaded on a segment header. In this case, the segment identity code indicates the segment data content, and the segment length data indicates the length of the segment data (number of bytes).

As shown in Fig. 12E, in the case that the segment identity code is a value (= 1), which indicates the broadcasting station identity code, the segment data includes the following codes in the order.
Extended country code: Extended code of the country which provides the broadcast program
Country code: Code of the country which provides the broadcast program
Cover area code: Cover area of the broadcast program (local, domestic, international, or wide area)
Broadcasting company number: Identity number of the broadcasting program

The extended country identity code and country identity code are therefore the code for indicating the country which provides the broadcast program.

The above-mentioned codes are the point of the present invention, and the respective language displays as shown in Figs. 9A to 9C are switched automatically in the present invention.

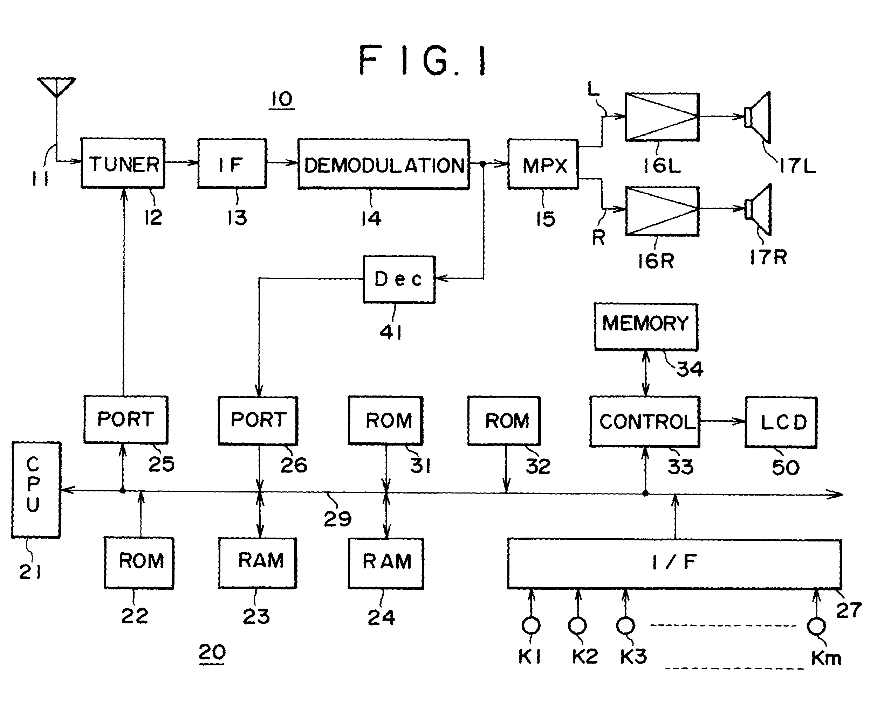

One embodiment of the present invention will be described referring to Fig. 1. A receiver shown in Fig. 1 can display 7 language displays. The term "country code" includes both the country code and the extended country code.

In Fig. 1, character 10 denotes an FM receiving circuit, an FM signal received by the antenna 11 is supplied to a frequency synthesizer type tuner circuit 12 to select a broadcasting station of the desired frequency, and the FM signal is converted to an intermediate frequency signal, the intermediate frequency signal is supplied to an FM demodulation circuit 14 by way of an intermediate frequency circuit 13 having an intermediate frequency filter and a wide band amplifier.

As described herein above, the demodulation circuit generates an added signal (L+R) formed by adding an audio signal L of the left channel and an audio signal R of the right channel of the stereo, a DSB signal which is subjected to balanced modulation by use of the difference signal (L-R), a pilot signal, and a frequency multiplexed signal multiplexed with LMSK signal of the FM multiplexed text broadcast.

The frequency multiplexed signal is supplied to a stereo demodulation circuit 15 to demodulate audio signals L and R from the added signal (L+R) and the DSB signal, the signals L and R are supplied to respective left channel and right channel speakers 17L and 17R by way of amplifiers 16L and 16R respectively.

The FM receiver is provided with a system control microcomputer 20 to realize broadcasting station selection and character display for FM multiplexed text broadcasts.

In detail, the microcomputer 20 comprises a CPU 21 for executing the program, a ROM 22 for the program and data table, a RAM 23 for work area, and a RAM 24 for receiving buffer of FM multiplexed text broadcast data. Memories 22 to 24 are connected to the CPU 21 by way of a system bus 29.

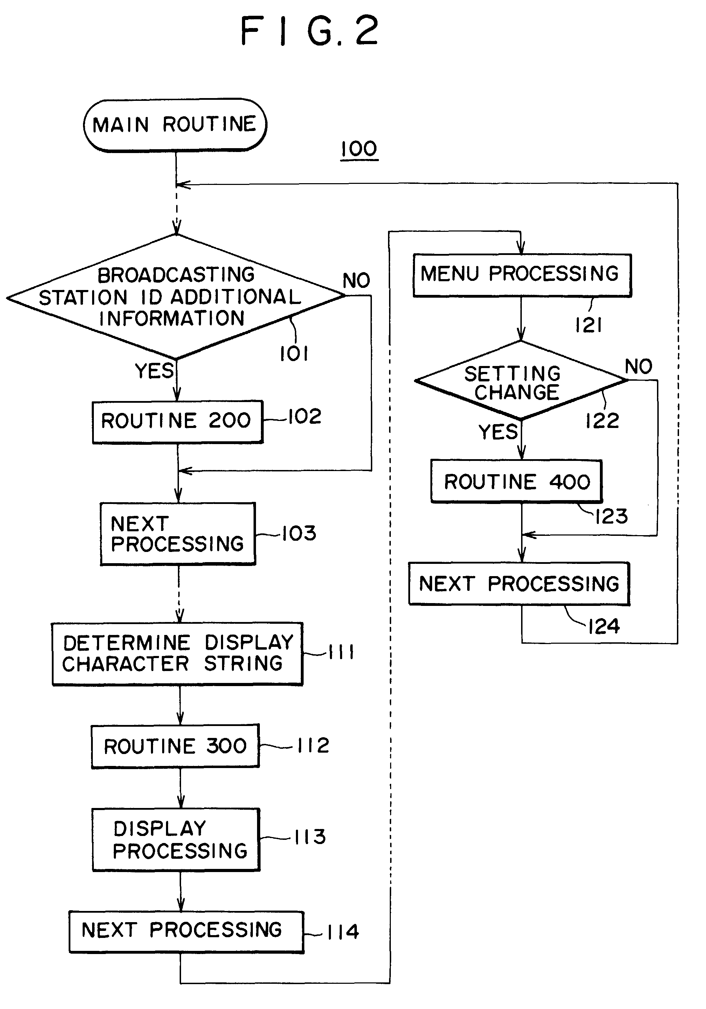

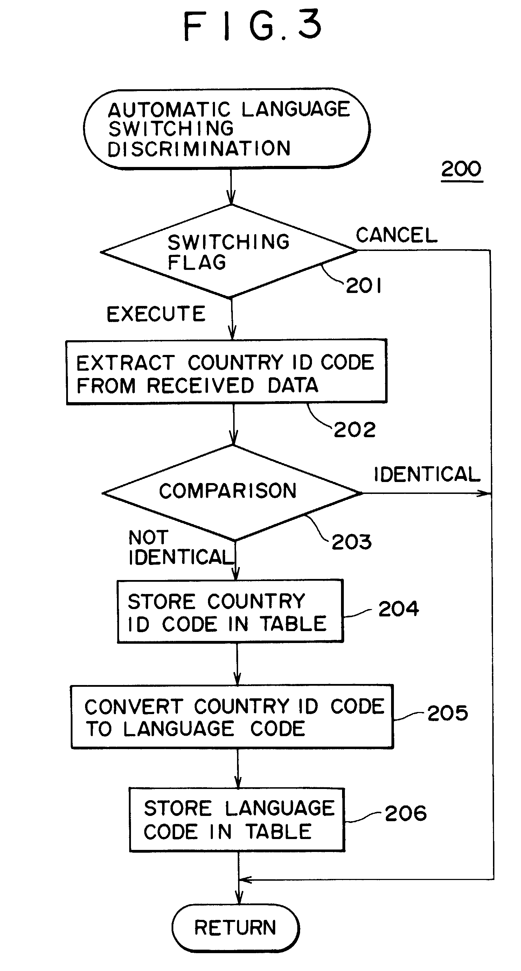

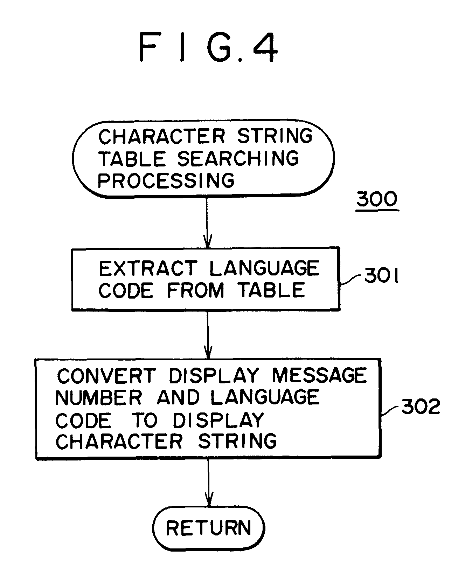

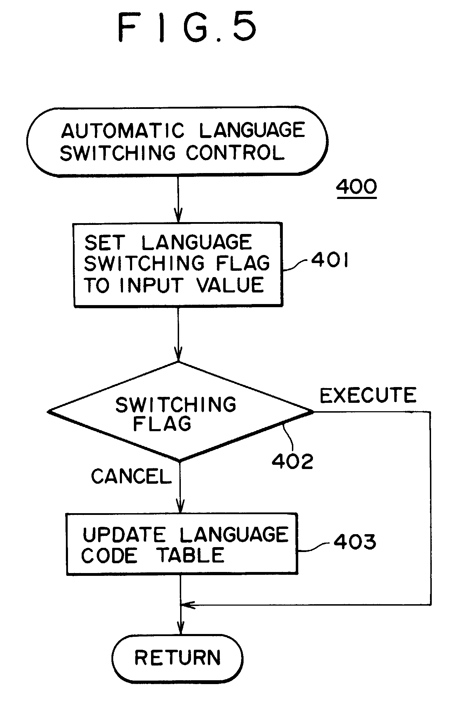

In this case, the ROM 22 stores various routines, for example, routines 100 to 400 shown in Fig. 2 to Fig. 5 are stored as a part of the routine. Though the detail of these routines 100 to 400 will be described hereinafter, only the part of the main routine 100 which relates to this invention is extracted and shown in Fig. 2.

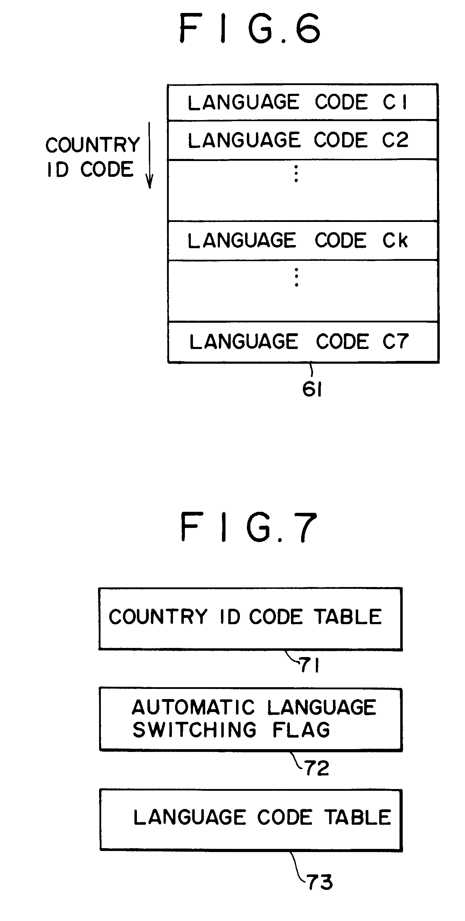

The ROM 22 stores a conversion table 61, for example, as shown in Fig. 6. The conversion table 61 is a table for converting the country code (Fig. 12E) included in the received text broadcast data to the corresponding language code. In the case that the same language is used in two countries having different country codes, for example, in the United States and the United Kingdom, the same language is assigned by using the conversion table 61. Because the receiver shown in Fig. 1 is acceptable of 7 languages, the language code includes 7 codes C1 to C7 (k= 1 to 7).

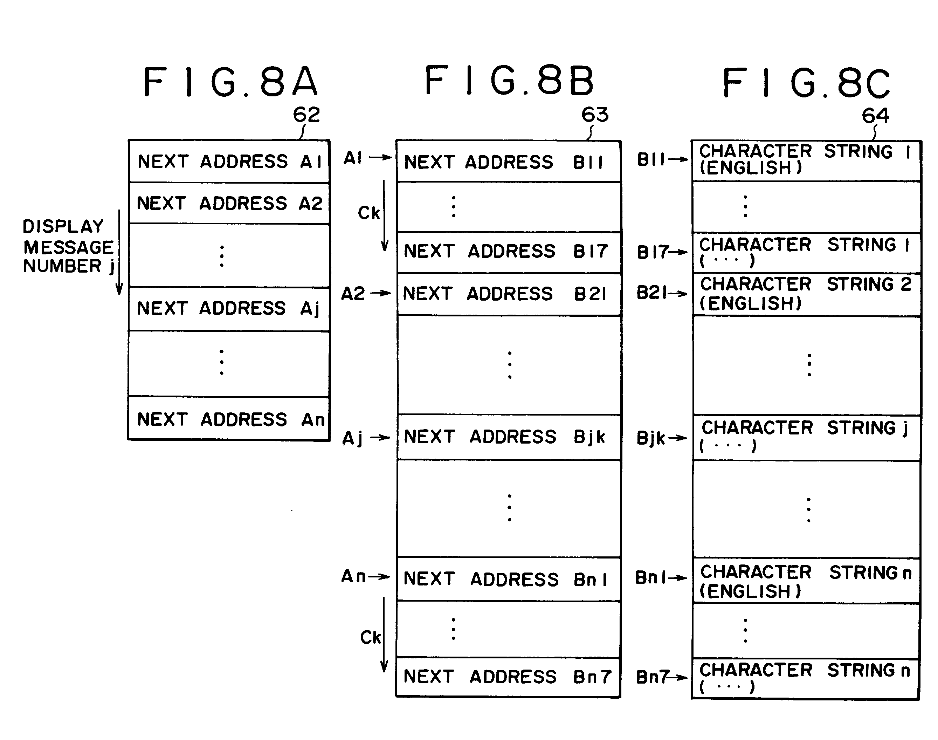

Further, the ROM 22 stores a character string table 64, for example, as shown in Fig. 8C, and the character string table 64 includes character strings (messages) which are used for displaying the operation mode and displaying menu for setting various functions in the form of character code of the respective languages.

Assuming that the number of character strings required for each language is n, in the respective areas having the head addresses B11 to B17 on the table 64, respective character code strings corresponding to the first character string, for example, "receiving data" in English, German, French, and etc. are stored, and in the respective areas having the head addresses B21 to B27, respective character code strings corresponding to the second character string in English, German, French, and etc. are stored.

Similarly to the above-mentioned first and second character strings, in the respective areas having the head addresses Bn1 to Bn7, respective character code strings corresponding to the n-th character string in English, German, French, and etc. are stored.

Display message number j (j= 1 to n) is assigned to the character strings 1 to n used for display, the character string is managed and selected based on the display message number. In the case that the display content is the same for different display languages, the same display message number is given.

The ROM 22 stores two conversion tables 52 and 53, for example, as shown in Fig. 8A and Fig. 8B, and the display message number j is converted selectively to the head address in which the character string of the desired language is included from among the head addressees B11 to Bn7 of the table 64 based on these conversion tables 52 and 53. The conversion table 52 is the table for converting the display message number to the first address Aj, and the conversion table 53 is the table for converting the first address Aj to the desired head address Bjk according to the language code Ck.

Further, for example, as shown in Fig. 7, the RAM 23 stores a country code table (memory area ) 71 for storing the country code, a language automatic switching flag 72 for indicating whether the display language is switched automatically, and a language code table (memory area ) 73 for storing the language code of the display language.

In this case, the display language is determined according to the country code stored in the table 71, and the country code in received data is usually stored. The display language is switched automatically according the received country code if the value of the flag 72 is "0", and on the other hand, the automatic switching is canceled if the value of the flag 72 is "1". Further, when the language is discriminated from the received country code, the table 73 stores the language code Ck of the discriminated language. When the display language is selected by manual operation, the code based on the manual operation is stored in the tables 71 and 73.

Further, ports 25 and 26 and an interface circuit 27 are connected to the bus 29. The port 25 supplies the data for selecting the broadcast station to tuner circuit 12, and a broadcast station is selected. A demodulated signal from the demodulation circuit 14 is supplied to the decoder circuit 41, in which the text program data is decoded from the LSMK signal and subjected to error correction, and the data is extracted, and then the data is supplied to the microcomputer 20 by way of the port 26. Further, various operational switches K1 to Km comprising non-lock type push switches are connected to the interface circuit 27, and the key output is supplied to the microcomputer 20.

Further, a font ROM (character generator) 31 and ID-ROM 32 are connected to the bus 29. In this case, the ROM 31 stores a table for converting the character code transmitted by FM multiplexed text broadcasts to the display data of the character defined by the character code. The ID-ROM 32 comprises, for example, a flash memory to realize the pager function, and stores the company inherent data and the terminal inherent data.

Further, a display controller 33 is connected to the bus 29, a display memory 34 is connected to the controller 33, and, for example, a LCD 50 is connected to the controller 33 as a display element. In this case, the LCD 50 is an element which displays characters or the like in the form of combination of dots, and has a display function, for example, as described referring to Fig. 10. Further, the memory 34 is of the bit map type corresponding to dot display method and has a capacity of one screen.

By applying the structure as described hereinbefore, when a key for selecting the broadcast station is pushed from among operational keys K1 to Km, the data corresponding to the key is supplied to the tuner circuit 12 by way of the port 25, and a broadcasting station is selected. If the selected broadcasting station broadcasts the text broadcast, the text broadcast data is extracted from the decoder circuit 41 and supplied to the microcomputer 20, and written in the receiving buffer RAM 24.

At that time, whether a broadcasting station ID code (Fig. 12E) is included in the received data is determined in step 101 of the main routine 100, and if YES, then the sequence proceeds from step 101 to step 102, routine 200 is executed in step 102, and if the display language is set so as to be selected automatically, then the language code Ck is stored in the language code table 73, and then the sequence proceeds to the next step 103.

If the received data includes no broadcasting station ID code in step 101, then step 102 is skipped, therefore the content of the language code table 73 is not changed.

In this case, routine 200 in step 102 is executed as described herein under. In detail, when the sequence transfers to routine 200, first in step 201, the language automatic switching flag 72 is checked, and if the flag is set to the execution of automatic switching (= "0"), then the sequence proceeds from step 201 to step 202, and the country ID code is extracted from the received data.

Next in step 203, the country ID code extracted in step 202 is compared with the country ID code stored in the country ID code table 71, and if the country ID code extracted in step 202 is not identical with the country ID code stored in the country ID code table 71, then the sequence proceeds from step 203 to step 204 because the country ID code has been changed after routine 200 was executed last time, and in step 204 the country ID code extracted in step 202 is stored in the country ID code table 71.

Subsequently, in step 205 the country ID code (the country ID code stored in the table 71) extracted in step 202 is converted to the corresponding language code Ck in the conversion table 61, next in step 206 the language code Ck obtained in step 205 is stored in the language code table 73, and routine 200 is brought to an end.

In step 201, if the language automatic switching flag 72 is set to the cancellation of automatic switching (= "1"), then the sequence skips steps 202 to 206 and the routine 200 is brought to an end from step 201. If the country ID code extracted in step 202 is found to be identical with the country ID code stored in the country ID code table 71 in step 203, then the sequence skips steps 204 to 206 and the routine 200 is brought to an end from step 201 because the country ID code has not been changed after routine 200 was executed last time.

By applying routine 200 (step 102), the language code Ck stored in the language code table 73 is updated to the newest data which is corresponding to the currently receiving country ID code.

Further, in the main routine 100, display processing of the character string is executed in a language which corresponds to the language code Ck in the language code table 73. In detail, when display of the character string is required newly, a display message number j of the character string which is to be used for displaying is selected in step 111, and then routine 300 is executed in the next step 112.

In routine 300, first in step 301, the language code Ck is extracted from the language code table 73. Subsequently in step 302, the display message number j selected in step 112 is converted to the corresponding address Aj by referring to the conversion table 62, and further the conversion table 63 is referred to the address Aj and the language code Ck obtained in step 112 as the base address and the offset value respectively to convert the address Aj and the code Ck to the corresponding address Bjk. Then the sequence returns to routine 100.

In routine 100, character codes of the character string stored in the area having the head address Bjk obtained in step 302 in the character string table 64 are read out successively in step 113 which is subsequent to step 112, the read out character codes are converted to the display data by use of the conversion table stored in the ROM 31, and the display data is written in the memory 34 by way of the controller 33.

At that time, the controller 33 reads out repeatedly the display data in the memory 34, and converts it to display signal and supplies to the LCD 50. Therefore, the LCD 50 displays the character or the like in the character string table 64 indicated by the character code which the CPU 21 has read out from the RAM 24. At that time, the sequence processing performed by the CPU 21 proceeds to step 114 which is subsequent to step 113.

Therefore, as the result of steps 111 to 113, the character string (message) specified by the display message number j is displayed on the LCD 50 in a language indicated by the language code Ck.

Further, in the main routine 100, execution/cancellation of automatic display language switching is set, and the display language which is to be displayed when automatic display language switching is canceled is set. In detail, when a menu key is pushed out of the keys K1 to Km, the menu processing is executed in step 121. In the menu processing, the menu is displayed on the LCD 50, an item to which setting is to be executed is selected and the content can be set for each selected item.

If the item of automatic switching of the display language is selected and execution/cancellation of automatic switching (when cancellation of automatic switching is selected, and if the display language is selected), then the sequence proceeds to step 122, whether the input content obtained in step 121 has been changed from the previous set content is determined in step 122, and the sequence proceeds from step 122 to step 123 if the input content has been changed.

In step 123, routine 400 is executed, the language automatic switching flag 72 is set according to the input content obtained in step 121, and if the automatic display language switching has been set to cancellation, then the language code stored in the language code table 73 is rewritten and the sequence subsequently proceeds to the next step 124.

On the other hand, if the input content obtained in step 121 is not changed from the previous set content, then the sequence skips step 123 and proceeds from step 122 to the next step 124.

In this case, routine 400 in step 123 is executed as described herein under. In detail, when the sequence proceeds to routine 400, first the language automatic switching flag 72 is set to the value "0" or "1" which was supplied in step 121.

Next, in step 402, whether the value of the language automatic switching flag 72 is set to cancellation (= "1") is determined, and if it is set to cancellation, then the sequence proceeds from step 402 to step 403, the content of the language code table 73 is rewritten in step 403 to the value of the language code Ck supplied in step 121, and then the sequence returns to routine 100.

On the other hand, if the value of the language automatic switching flag 72 is set to execution (= "0"), then the sequence skips step 403 and returns to routine 100 from step 402.

Accordingly, execution/cancellation of automatic display language switching is selected, and if cancellation is selected, then the display language is selected and set manually.

As described hereinbefore, the receiver shown in Fig. 1, when operation mode is displayed and function setting menu is displayed, automatically switches the language to be used for display to the language to be used in the area where the receiver is used, and therefore a user can operate the receiver referring to the display displayed in the native language without troublesome switching operation of the display language.

Further, it is not necessary that the manufacturer sets the language for respective countries of destination in the factory for shipping or the language is switched in a shop by a shop people when a receiver is given to a customer.

Further, because the automatic switching of the display language can be canceled, the display language is not changed automatically when the receiver is carried out to another country, and the display displayed in the native language remains unchanged.

According to the present invention, when a user wants to display the operation mode or display the function setting menu, the user can operate the receiver referring to the display displayed in the native language without troublesome display language switching operation. Further, it is not necessary that the manufacturer sets the language for respective countries of destination in the factory for shipping or the language is switched in a store by a store clerk when a receiver is given to a customer.

Further, because the automatic switching of the display language can be canceled, the display language is not changed automatically when the receiver is carried out to another country, and the display displayed in the native language remains unchanged.

## Claims

1. A text broadcast receiver for receiving multiplexed text broadcasts comprising:
a receiving circuit for receiving said multiplexed text broadcasts;
a decoder circuit for extracting said text program data from the multiplexed signal received by said receiving circuit;
a display element for displaying said text program based on the data extracted by said decoder circuit; and
a character string table which stores character strings in a plurality of languages corresponding to the character string used when the operation mode of said receiver or function setting menu is displayed, and
the operation comprising:
a step for extracting ID code for identifying the country or the language from said data extracted by said decoder circuit;
a step for selecting a character code string of the language corresponding to said extracted ID code from among character code strings in said character string table; and
a step for displaying said operation mode or function setting menu on said display element by use of said selected character string.

2. The text broadcast receiver as claimed in claim 1, wherein said multiplexed text broadcast is of DRIS system.

3. The text broadcast receiver as claimed in claim 1, wherein the processing for selecting a character string of the language corresponding to said extracted ID code is canceled, and said character code string is selected by use of ID code corresponding to the language selected manually.

4. The text broadcast receiver as claimed in claim 3, wherein said multiplexed text broadcast is of DRIS system.
